# EUROPEAN PATENT APPLICATION

(11) **EP 4 491 822 A1**
(43) Date of publication of application: **15.01.2025**
(21) Application number: 24187249.8
(22) Date of filing: 08.07.2024
(51) Int. Cl.: E04C 2/20, E04C 2/34, E04C 2/38, E04C 2/54

(54) **PANEL FOR A STRUCTURE**

(30) Priority: 12.07.2023 GB 202310667
(71) Applicant: Ripe Building Services Limited, Warwick Warwickshire CV35 9EF (GB)
(72) Inventor: MATTOCKS, Richard, Suffolk, IP20 0PD (GB)
(74) Representative: Pure Ideas Limited

(57) **Abstract**

A panel (1) for an agricultural structure, the panel comprising a frame (2) with at least one film sheet (3a, 3b) joined together along one edge to form a tube or loop around the frame (2) and shrunk around that frame whereby to a desired extent at ambient temperatures for tension after exposure to a pre-determined combination of temperature and exposure time duration.

## Description

The present invention relates to a panel and more particularly to panels used in forming structures for horticultural uses within which plants, fruit and vegetables can be grown.

Structures for growing have been used for many years. Such structures include greenhouses, glasshouses, so-called poly tunnels and similar. In broad terms these structures comprise a skeletal frame within which glass or plastic sheet or panels are secured. The glass or plastic sheet or panel essentially allow transmission of UV light and capture of warmth such that plant growth and fruiting is promoted.

More recently, use of ethylene tetrafluoroethylene (ETFE) plastic sheets has been used due to its reliance, strength and weight which put less stress on the skeletal frame. An issue relates to installation of this film directly, particularly as a retrofit for existing glass sheet or panel installation. Although this would have advantages in terms of performance of the structure for growing purposes in terms of heat retention along with light transfer. The panels must be robust and allow installation with limited training whilst being light enough for transport and manipulation. The panels need to be relatively simple to form and cost effective less avoiding problems with condensation which might inhibit UV light transfer.

A prior UK Patent GB2468915 describes an architectural glazed panel in which a plastics film is stretched over a frame but generally is of much greater dimensions In accordance with aspects of the present invention, there is provided a panel of a structure as described in claim 1 below and with additional or alternative features as described in the dependent claims thereto.

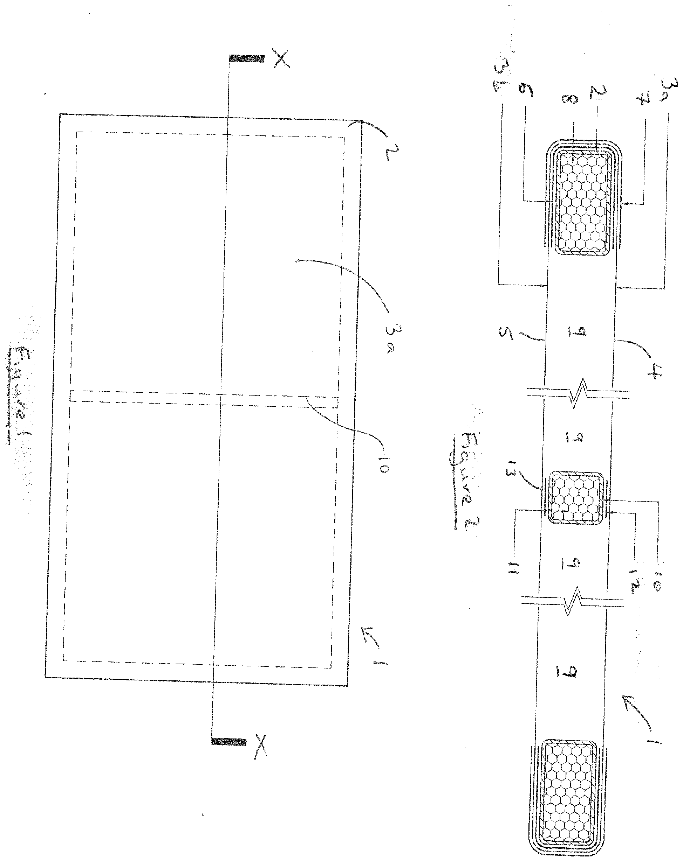

An embodiment of aspects of the present invention is described with reference to the following accompanying drawings in which;-
Figure 1 is a schematic plan view of a panel; and,
Figure 2 is a schematic cross-section along the line X-X depicted in figure 1.

In accordance with aspects of the present invention, and as shown in the drawings, a panel 1 is used as a lightweight insulated glazing cassette which in use can typically replace a glazing panel or be used in its stead in original structures. The panel 1 comprises a rigid frame 2 of generally hollow sections over which two layers of lightweight glazing ETFE film or foil 3a, 3b is tensioned, one to the external face 4 and one to the internal face 5 of the frame 2. The frame 2 has an inner gasket/tape 6 and an outer gasket/tape 7 in use to form a seal within the frame 2 and with an aperture (not shown) in a greenhouse or similar structure within which the panel 1 is be secured. The frame 2 also generally includes a desiccant 8 to absorb moisture such that an inner void 9 of the frame 2 does not fog and so adversely affect the performance of the panel 1 in an agricultural structure for growing such as a greenhouse.

The frame 2 features no mechanical fixings, and is intended to be constructed either from push fit connections or fully welded or bonded together. The lack of presence of mechanical fixings reduces the opportunity for uneven / sharp edges being present in the frame 2 that could damage the glazing foil 3. The frame 2 will be formed from metal and/or plastics materials including steel and aluminium with rounded edges and corners to resist fraying. The corners are also rounded to inhibit puncture along sharp edges. The frame sections are hollow to reduce weight and may have a rectangular, round or oval cross-section.

In additional to the perimeter frame 2, an additional frame member 10 is present to provide additional rigidity to the panel 1 cassette for installation and storage. Whilst this additional member 10 may span between the mid points along the long edges of the cassette, the position and orientation of the member 10 can vary depending on the individual panel cassette's size, shape, final installed orientation and structural requirements.

This member 10 is hollow and is typically filled with desiccant 11. The presence of desiccant 11 within the void 9 between the internal glazing foil 3 acts to absorb any moisture that may be present within the frame 2 or become introduced into the frame 2 at a later date, prolonging the serviceable life of the panel 1 cassette.

The panel 1 typically has isolator inner gaskets 6, 12, 13 between the frame 2 and member 10 and the foil 3, this can be either a dedicated gasket component or a tape of various materials. These gaskets 6, 12, 13 isolate the glazing ETFE foil 3 from the frame 2 to reduce damage to the foil 3 from physical movement of the foil against the frame 2, from any source including, but not limited to, wind, thermal and movement of the complete cassette. The gaskets 6, 12, 13, also isolate the foil 3 from the frame 2 to reduce thermal conduction through the perimeter frame 2 of the panel 1 in a conventional stretch directly on or over the formation technique to the frame.

The frame 2 is anticipated to be formed from steel or an aluminium alloy, but could also be any other suitable material including, but not limited to, carbon fibre, resin or GRP. The frame 2 can be either a solid or preferably hollow member to limit weight, dependant on the structural requirements of the individual panel cassette in accordance with aspects of the present invention. The frame 2 can be rectangular in cross-section or rounded in an oval or round cross-section. As the film 3 is under tension and shrunk onto the frame sharp edges should be avoided which may damage the film 3 so at least outside peripheral edges should be rounded to reduce sharp stressing of the film at these points.

The internal gaskets 6, 12, 13 are anticipated to be a thin tape type product in either aluminium, PTFE, nylon or plastic film, but could be any suitable material or combination of materials.

The externally facing glazing foil 3a at least is anticipated to be a pre-stretched ETFE foil between 80µm and 400µm in thickness, but could be any suitable glazing foil currently in use suitable for glazing. Generally, a single sheet or sheets of film are turned such that opposed normally longitudinal edges are secured and sealed to form a tube or loop within which the frame can be located. However, in some circumstances the tube or loop could be formed of 2 or more strips of film each secured on longitudinal edges to create a tube or loop within which the frame can be secured. It will be appreciated these joints may be lines of weakness within the film 3 (a composite of strips of film in that configuration and embodiment) or not but in any event such an approach may allow film of different characteristics to be positioned on inner surface 5 (film 3b) compared to the outer surface 4 (film 3a) if desired. Similarly, possibly thicker film can be used where it stretches over the frame 2 at the peripheral edges for greater strength or possibly 'springer' strips place in the film to maintain tension and/or absorb wind fluctuations incident on the panel 1. Furthermore, a strip of more robust film 3 might be placed over the member 10 to provide resilience as well as possible to allow some degree of slip (with or without) any form of anti slip or increased slip surface at the gaskets 12, 13.

The panel 1 is manufactured by welding pre-stretched glazing foil 3 together into a tube or loop, into which the rigid frame 2 is inserted. The foil 3 is then sealed to form an un-tensioned enclosed unit. This unit is then heated in an oven at a temperature of between 150°C and 200°C, for a period of between 15 seconds and 20 minutes. The oven can be either a conduction oven, a convection oven, an infrared radiation oven, or a mixture of all these types.

The panel is then naturally cooled following removal from the oven. Once cooled, an external gasket / tape 7 is applied to the perimeter of the unit. This gasket 7 protects the glazing film 3 from damage at the perimeter of the unit, especially when being installed into the final support aperture on or into the building or structure. The gasket 7 also adds an additional thermal isolating layer between the support frame and the panel 1. It will be appreciated in a building or structure generally a number of panels 1 in accordance with aspects of the present invention will be used in a similar manner to glazing panels with appropriate fixings and/or sealing about edges. The panels can be configured in terms of size and depth so that panels in accordance with aspects of the present invention can be retro fit instead of glass/glazing panels or panels used in originally formed skeletal structures or buildings with apertures for the panels such as greenhouses.

The external gasket 7 is anticipated to be a thin tape type product in either aluminium, PTFE, nylon or plastic film, but could be any suitable material or combination of materials.

The panel 1 provides a more thermally insulating panel, significantly reducing energy consumption within the building and reducing the building's environmental impact.

The panel 1 provides a glazing panel that transmits more light and UV light across a wider wavelength spectrum than traditional glazing such as glass. In a greenhouse, this enables the plants to grow stronger and quicker than under a traditional glass roof.

The panel 1 is much safer than traditional glazing used. If damaged the panel 1 cassette unit will not shatter and fall into the space below, unlike traditional glazing which will shatter and fall as sharp pieces into the space below, potentially harming any people or plants underneath or whilst subsequently working. It will also be understood with certain produce from a traditional agricultural structure that extra care will be need such that shards of glass do not contaminate the produce as harvested.

The panel 1 is lighter in weight than traditional glazing, ETFE is around 0.2kg/m² compared to 15kg/m² for 6mm thick glass. This can enable the supporting structures / buildings to be designed with lighter weight sections, reducing cost and environmental impact as well as potentially being more open so allowing more light access. The lighter weight of panel also makes installation and replacement much easier without the need for specialist lifting equipment in most circumstances.

The frame 2 features the generally central spanning frame intermediate member 10. This adds strength and rigidity to the frame 2 and allows for larger, longer spanning cassettes to be installed. The member 10 can be substantially the same thickness as the main frame 2 so that the outer surface at least is flat or marginally thicker or thinner to create a slope or dished surface or to provide a desired tension for the film or panel cross-sectional profile. This may have advantages where the panels will be relatively flat in use so sloping or dishing may help modest precipitation run off and possible as such clearer film exposure to sunlight. The central frame member may also flex or provide by some compression or extension ensuring some tensioning in the frame against the film across it. These properties and/or dimensions may be finely determined to give desired results upon installation and also to give some structural resilience in one side of the cassette if the film is punctured or torn on the other side of the member 10.

As indicated above, the central spanning frame member 10 is hollow and filled with desiccant. The presence of desiccant within the internal void between the internal and external glazing foils removes moisture present within the void both at time of manufacture (thermal cycling may cause some condensation around the dew point of the air within the void), and also moisture that could be introduced throughout the panel 1 cassette's lifespan, for instance if the glazing foil should become damaged, pin punctured, allowing new air into the cassette void. The removal of moisture within the void will prevent condensation, algae and mould from forming inside the cassette which could affect light transmission through the panel, affecting the growth of the plants underneath.

It will also be appreciated that the panel 1 in accordance with aspects of the present invention comprises essentially a double skin (film 3) so if one skin is punctured then this may be repaired, temporally for example for the remainder of a growing season for replacement at annual maintenance or for a longer period, so once repaired with a patch the void is again closed so by providing the desiccant the extent of dew misting and fogging is limited.

The frame is to be completely fixing free. This eliminates any potential sharp points on the frame where it comes into contact with the glazing foils, preventing any localised wear and premature failure in the glazing foil.

The frame features the central spanning frame member 10. This adds strength and rigidity to the frame and allows for larger, longer spanning cassettes to be installed. The member 10 can extend laterally as depicted or longitudinally or both.

The central spanning frame member 10 is hollow and filled with desiccant. The presence of desiccant within the internal void between the internal and external glazing foils removes moisture present within the void both at time of manufacture, and also moisture that could be introduced throughout the cassette's lifespan, for instance if the glazing foil or frame should become damaged allowing new air into the cassette void. The removal of moisture within the void will prevent condensation, algae and mould from forming inside the panel 1 cassette.

The frame 2 features an internal gasket 6, 12, 13 between the frame 2 and member 10 respectively, and the glazing foil 3. This provides physical isolation of the glazing foil 3 from the frame 2, reducing wear of the foil by the frame when undergoing thermal and physical movement. These gaskets 6, 12, 13 also provide a thermal isolation between the frame 2 and the foil 3, improving the thermal performance of the panel 1.

The frame 2 features an external perimeter gasket 7 around the outside of the glazing foil 3 to the extent of the frame 2. This gasket 7 provides a physical separation of the glazing foil 3 from the buildings or structures frame aperture that the panel 1 is installed into. This gasket 7 also provides a thermal isolation between the building/structure and the panel 1, improving the thermal performance of the cassette.

The panel 1 uses pre-stretched glazing foils 3, allowing initial installation of the glazing foils 3 to the frame 2 to be performed at room temperature, improving the safety of the manual handling required for fabrication, and reducing the oven time and energy required to fabricate the panel 1, reducing the environmental impact of the product.

The central member 10 being hollow, as with the remainder of the frame, in addition to desiccant may also have inserts to alter the strength/properties of these elements. Pockets or indents or tabs can be provided in the hollow frame members for location and allow outward or inward projection by retainer lugs into a structure/frame so the panel is more firmly secured. The central member 10 can be sprung in compression to force engagement with these lugs (not shown).

The panel 10, or at last some of the panels in a structure, once installed may be arranged to be filled with a liquid or a gas (the liquid may be come gaseous once heated by sunlight in use) so regulating temperature and/or causing the film to bow into a convex or concave surface across the frame and central member 10.

The usually rectangular frame components may have a different cross-section to the central member 10 as well as being formed with different materials to give different structural results.

The frame and/or the central member may include reinforcer elements in their hollow centres which can be retained or removed dependent upon requirements through holes in the tear resistant film and/or punched out. Such reinforcers might be of particular use whilst incorporating film across the frame in manufacture.

The corners and/or the T junctions of the central member with the frame may be configured with a patch or stippling or otherwise to provide surfaces upon which an adhesive can be applied to allow location and retention of the panel in a structure.

Perimeter of the frame 2 profile / shape can be altered to allow for fitting to alternative structural support frames.

In order to improve light transmission and presentation, inner edge surfaces of the frame sections and/or the cross member can be curved to reflect light so avoiding or mitigating shadowing within a growing surface below the panels in a structure such as a greenhouse. The curved surface can be convex or concave with a consistent cross section or taper along the length of a section to reflect light to a desired orientation or projection within the panel.

While the invention has been illustrated and described in detail in the drawings and preceding description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. Each feature of the disclosed embodiments may be replaced by alternative features serving the same, equivalent or similar purpose, unless stated otherwise. Therefore, unless stated otherwise, each feature disclosed is one example of a generic series of equivalent or similar features.

In the claims, the word "comprising" does not exclude other elements or steps, and the indefinite article "a" or "an" does not exclude a plurality. Any reference signs in the claims should not be construed as limiting the scope.

## Claims

1. A panel (1) for an agricultural structure, the panel comprising a continuous substantially rigid frame (2) formed without mechanical fixings with at least one pre-stretched film sheet (3a, 3b) joined together alone one edge to form a tube or loop around the frame (2) and shrunk around that frame to a desired extent at ambient temperatures for tension across opposed sides of the frame after exposure to a pre-determined combination of temperature and exposure time duration, the tension due to the nature of the shrunk film.

2. A panel as claimed in claim 1, wherein at least the outer edges of the frame (2) engaging the film (3a, 3b) are rounded.

3. A panel as claimed in claim 1 or claim 2, wherein the frame (2) includes an intermediate central member (10).

4. A panel as claimed in any of claims 1 to 3, wherein the frame (2) has a hollow section (9) filled with a desiccant (11).

5. A panel as claimed in any preceding claim, wherein an inner gasket/tape (6) is applied between frame (2) and the film (3a, 3b).

6. A panel as claimed in any preceding claim, wherein an outer gasket/tape (7) is applied upon the film around the peripheral edge of the panel.

7. A panel as claimed in claim 1 and any claims dependent upon claim 3, wherein a gasket or tape (12, 13) is applied between the intermediate member (10) and the film (3a, 3b).

8. A panel as claimed in any preceding claim, wherein a single film sheet is used to form the tube or loop.

9. A panel as claimed in any preceding claim, wherein the film (3a, 3b) is fluorinated ethylene propylene (FEP) or ethylene tetrafluoroethylene (EFTE) plastics material.

10. A panel as claimed in any preceding claim, where the film (3a, 3b) has a thickness in the range 80µm and 400µm.

11. A panel as claimed in any preceding claim, wherein the frame (2) is formed with push- fit and/or welded and/or bonded joints.

12. A panel as claimed in any preceding claim, in which at least part of the frame (2) has a curved inward presented surface to reflect light within the panel (1) .

13. A panel as claimed in claim 12, in which the curved surface has a convex cross-section.

14. A panel as claimed in claim 12 or claim 13, in which the curved surface has an angle less than 15 degrees to the flat perpendicular to the relevant frame section having the curved surface.

15. A method of making a panel as claimed in any of claims 1 to 14, wherein the pre-determined combination of temperature and exposure time duration is in the following ranges, temperature of between 150°C and 200°C, for a time period of between 15 seconds and 20 minutes.

16. A method as claimed in claim 15, wherein the whole panel (1) is subject to the pre-determined combination of temperature and exposure time duration in an oven.

17. A method as claim 15 or claim 16 when dependent upon claim 4, wherein the desiccant (11) acts to absorb any moisture in a void of the panel (1) particularly due to variation in the dew point with the void during exposure to the combination of temperature and exposure time duration and/or use of panel.

18. A method as claimed in any of claims 15 to 17, wherein after exposure to the pre-determined combination of temperature and exposure time duration the panel (1) is allowed to naturally cool.

19. An agricultural structure such as a greenhouse including a panel (1), as claimed in any of claims 1 to 14.
